# EUROPÄISCHE PATENTSCHRIFT

(11) **EP 3 535 149 B1**
(45) Veröffentlichungstag und Bekanntmachung des Hinweises auf die Patenterteilung: **30.03.2022**
(21) Anmeldenummer: 17781107.2
(22) Anmeldetag: 09.10.2017
(51) Int. Cl.: B60K 5/12, B60K 5/02

(54) **BEFESTIGUNG EINES ANTRIEBSAGGREGATS AN EINEM FAHRZEUGAUFBAU**
MOUNTING OF A PROPULSION UNIT ON A VEHICLE CHASSIS
FIXATION D'UN GROUPE MOTO-PROPULSEUR SUR UN CHÂSSIS DE VÉHICULE

(30) Priorität: 04.11.2016 DE 102016221653
(43) Veröffentlichungstag der Anmeldung: 11.09.2019
(73) Patentinhaber: Bayerische Motoren Werke Aktiengesellschaft, 80809 München (DE)
(72) Erfinder: GERRITS, Niklas, 82008 Unterhaching (DE); HIRSCHHAUSEN, Joerg, 81479 München (DE); KRONBECK, Alexander, 80469 München (DE); NANOS, Zisis, 81541 München (DE)
(86) Internationale Anmeldenummer: PCT/EP2017/075656
(87) Internationale Veröffentlichungsnummer: WO 2018/082870

(56) Entgegenhaltungen:
- EP-A1- 0 279 875
- DE-A1- 3 543 835
- DE-A1- 10 223 517
- DE-A1- 10 334 901
- JP-A- H08 282 303

## Beschreibung

Die Erfindung betrifft eine Befestigung eines Antriebsaggregats an einem Fahrzeugaufbau nach dem Oberbegriff des Anspruchs 1. Zum Stand der Technik wird hierzu auf die DE 103 34 901 A1 verwiesen. Als weiteren Stand der Technik wird auf die DE 10 2011 079 111 A1 verwiesen.

Die Motor-Getriebe-Einheit eines Kraftfahrzeuges wird üblicherweise als Antriebsaggregat bezeichnet. Das Antriebsaggregat wird dabei beispielsweise über Motorlager, Getriebelager und Drehmomentenstützen am Fahrzeugaufbau elastisch gelagert. Die Aggregatlager nehmen die statische Last der Motor-Getriebe-Einheit auf und begrenzen die maximalen Wege bei Lastwechseln oder hohen Drehmomenten. Beispielsweise wird dabei versucht die Einleitung von Körperschall durch die Motor- und Getriebeanregung in die Karosserie wirkungsvoll zu unterdrücken, um Vibrationen, den Schwingungskomfort sowie den Innengeräuschpegel über den gesamten Drehzahlbereich des Motors für Insassen des Fahrzeuges komfortabel zu gestalten.

Ein wichtiger Parameter zur Auslegung der Aggregatlager ist neben beispielsweise dem zur Verfügung stehenden Bauraum, der Belastungsart, die maximalen Kräfte, die Einbaulage des Aggregates. Als Belastungsarten können an den Lagern Kräfte in axialer und radialer Richtung auftreten und Momente in Form von Torsion und Kardanik. Das Antriebsaggregat kann als Folge von elastischen Lagerungen translatorische und rotatorische Bewegungen ausführen. Dadurch wirkt das Antriebsaggregat mit seinen Lagern als Feder-Masse-System. Alle Lager eines Antriebsaggregats beeinflussen sich gegenseitig und müssen deshalb aufeinander abgestimmt sein. Üblicherweise wird ein Antriebsaggregat eines Fahrzeuges zur Abdeckung aller auftretenden Kräfte über zwei Motor- und einem Getriebelager als Traglager an den Fahrzeugaufbau, also an der Fahrzeugkarosserie, beispielsweise an den Achsträgern gelagert.

Schwierig bei der Auslegung derartiger Aggregatlagerungen sind die sich teilweise widersprechenden Anforderungen hinsichtlich Dämpfung und Steifigkeit. Beispielsweise ist es aufgrund Akustikanforderungen wünschenswert, die Lagerung möglichst weich auszulegen. Aus Schwingungskomfortgründen ist jedoch eine steife Lagerung des Antriebsaggregats erstrebenswert, da keine unerwünschten fahrbahn- oder antriebserregten Koppelschwingungen auftreten sollen. Da es in der Praxis schwierig ist all diese unterschiedlichen Anforderungen zu erfüllen, treten so noch immer Schwingungen auf, welche zu unerwünschten Geräuschen oder Vibrationen führen.

Ein bekanntes unerwünschtes Schwingungsverhalten ist dabei das sogenannte Motorstuckern. Motorstuckern bezeichnet eine Resonanzschwingung des Antriebsaggregats (hauptsächlich) in Fahrzeughoch-, unter Umständen jedoch auch in Fahrzeuglängsrichtung. Es entsteht beispielsweise bei Fahrt auf mittelschlechter bis schlechter Fahrbahn, wie beispielswiese auf einer Beton-Autobahn oder bei Kantenüberfahrt. Aus Fugenabstand und Fahrgeschwindigkeit ergibt sich dort eine Erregerfrequenz. Stimmt diese mit der Resonanzfrequenz des elastisch gelagerten Antriebsaggregats überein, kommt es zum Motorstuckern.

Das genannte Motorstuckern stellt nur ein Beispiel von vielen weiteren möglichen Koppelschwingungen dar, welche aufgrund genannter Zielkonflikte zwischen den unterschiedlichen Anforderungen auftreten können. Dabei gibt es unterschiedliche Möglichkeiten um derartige Zielkonflikte entgegen zu wirken.

So zeigt die DE 10 2011 079 111 A1 eine Aggregat-Befestigung zum schwingungsfähigen Festlegen von Aggregaten eines Antriebs an einer Karosserie und/oder einem Fahrwerk eines Kraftfahrzeuges, mittels schwingungsdämpfenden Elementen, wovon wenigstens drei als Traglager am Aggregat, in Richtung der Hochachse gesehen, im Bereich unterhalb dessen Schwerpunkt angebracht sind. Dabei ist wenigstens ein weiteres Schwingungen dämpfendes Element in Fahrzeuglängs- und Querrichtung in der Nähe des Aggregatschwerpunkts und in Richtung der Fahrzeughochachse über dem Aggregatschwerpunkt angeordnet. Durch eine solche Anordnung soll eine optimierte Schwingungsisolierung zwischen dem Antriebsaggregat und dem Fahrzeugaufbau gewährleistet werden, wobei sich der Komfort hinsichtlich beispielsweise Stuckern verbessern soll.

Eine weitere bewährte Technik zur Vermeidung von unerwünschten Schwingungen ist der Einsatz sogenannter aktiver Lager, welche mit Hilfe integrierter Aktuatoren je nach Auslegung unterschiedlich stark und in unterschiedliche Richtungen zu dämpfen vermögen. Derartige aktive Lagerungen sind jedoch komplex in ihrem Aufbau und nehmen durch zusätzlich benötigte Komponenten, wie beispielsweise eine Hydraulikpumpe, Sensorik und weiteres, vermehrten Bauraum und zusätzliches Gewicht ein.

Auch mittels einer Änderung der Gummimischungen von herkömmlichen Motorlagern kann zwar die Steifigkeit und damit das Schwingungsverhalten des Antriebsaggregats verändert werden, jedoch ist eine gezielte, richtungsabhängige Änderung zur Dämpfung nur in eine bestimmte Richtung wirkenden Schwingung nicht ohne Einbußen des Schwingungsverhalts in andere Raumrichtungen möglich. Denn durch die Änderung der Gummieigenschaften wird die Steifigkeit in alle Koordinatenrichtungen an einer Aggregatlagerung verändert.

Es ist somit Aufgabe der Erfindung eine Befestigung eines Antriebsaggregats an einem Fahrzeugaufbau aufzuzeigen, welche den Zielkonflikt zwischen Akustik und Schwingungskomfort zu lösen vermag und dabei den unterschiedlichen Anforderungen an den Aggregatlagerungen gerecht wird.

Die Lösung der Aufgabe ergibt sich durch eine Befestigung eines Antriebsaggregats an einem Fahrzeugaufbau mit den Merkmalen des Anspruchs 1. Vorteilhafte Aus- und Weiterbildungen sind Inhalt der Unteransprüche.

Es wird eine Befestigung eines Antriebsaggregats eines Kraftfahrzeuges an einem Fahrzeugaufbau vorgeschlagen, welche zumindest drei schwingungsdämpfende Elemente umfasst.

Neben diesen schwingungsdämpfenden Elementen ist ein zusätzliches Feder- und/oder Dämpfungselement zur Lagerung des Antriebsaggregats am Fahrzeugaufbau, angeordnet. Dieses zusätzliche Feder- und/oder Dämpfungselement ist erfindungsgemäß derart zwischen dem Antriebsaggregat und dem Fahrzeugaufbau angeordnet, dass dessen Hauptwirkrichtung zumindest überwiegend bzw. im Wesentlichen in Fahrzeuglängsrichtung verläuft.

Unter einem genannten Antriebsaggregat eines Kraftfahrzeuges, insbesondere eines zweispurigen Kraftfahrzeuges, wird im Sinne der Erfindung bevorzugt eine sogenannte Motor-Getriebe-Einheit verstanden. Dabei ist die Motor-Getriebe-Einheit bevorzugt derart im Fahrzeug positioniert, dass das Getriebe in Fahrzeuglängsrichtung betrachtet hinter dem Motor angeordnet ist. Besonders bevorzugt handelt es sich dabei um eine sogenannte längseingebaute Motor-Getriebe-Einheit, bei welcher die Abtriebswelle des Antriebsaggregats in Fahrzeuglängsrichtung angeordnet ist.

Neben einer Motor-Getriebe-Einheit kann das Antriebsaggregat auch einen Elektromotor oder ähnliches darstellen.

Das Antriebsaggregat wird an einem Fahrzeugaufbau, also beispielsweise an einer Fahrzeugkarosserie oder einem Achsträger, abgestützt bzw. gelagert.

Die Lagerung des Antriebsaggregats am Fahrzeugaufbau umfasst dabei zumindest drei schwingungsdämpfende Elemente. Derartige schwingungsdämpfende Elemente stellen bevorzugt zwei sogenannte Motorlager und ein Getriebelager dar. Bevorzugt stützen die beiden Motorlager den Motor und das Getriebelager das Getriebe am Fahrzeugaufbau schwingfähig ab. Insbesondere das Getriebelager ist dabei bevorzugt so angeordnet, dass dessen Hauptwirkrichtung insbesondere in Fahrzeughochrichtung ausgerichtet ist. Derartige Motor- und Getriebelager können beispielsweise als elastisch verformbare Gummilager oder als schwingungsdämpfende Hydrolager (hydraulisch wirkende Lager) ausgebildet sein.

Das genannte zusätzliche Feder- und/oder Dämpfungselement kann ebenso wie die anderen schwingungsdämpfende Elemente als Gummilager bzw. als Hydrolager oder ähnlichem ausgebildet sein.

Wie bereits genannt ist es vorgesehen, dass das zusätzliche Feder- und/oder Dämpfungselement derart angeordnet ist, dass es im Wesentlichen in Fahrzeuglängsrichtung wirkt. Unter im Wesentlichen ist im Sinne dieser Erfindung die Hauptwirkrichtung des zusätzlichen Feder- und/oder Dämpferelements angesprochen. Unter Hauptwirkrichtung ist im Sinne der Erfindung eine solche Richtung angesprochen, in welcher die Federung- bzw. Dämpfung des Feder- bzw. Dämpfungselements hauptsächlich bzw. zu einem überwiegenden Anteil wirkt. Im Falle eines elastisch verformbaren Gummilagers beispielsweise ist die Hauptwirkrichtung diejenige, in welcher im Anregungsfall die höchste Schwingungsanregung zu erwarten ist und welche dementsprechend maßgeblich die Auslegung des Lagers hinsichtlich Grundsteifigkeit und Dämpfung bestimmt.

Durch die Anordnung des Feder- und/oder Dämpfungselements derart, dass dessen Hauptwirkung in Fahrzeuglängsrichtung ausgerichtet ist, kann die Steifigkeit bzw. eine Steifigkeit der Aggregatanordnung in eine gewünschte Richtung (in diesem Falle in Fahrzeuglängsrichtung), unabhängig von anderen Richtungen, abgestimmt werden. Dies hat den Vorteil, dass das Antriebsaggregat in Fahrzeuglängsrichtung mit einer genau bestimmbaren Steifigkeit gelagert werden kann und das zusätzliche Feder- und/oder Dämpfungselement die gesamte Schwingungsdämpfung des Antriebsaggregats in Fahrzeuglängsrichtung übernehmen kann.

In einer bevorzugten Ausführung der Erfindung sind an dem Antriebsaggregat zwei zusätzliche Feder- bzw. Dämpfungselemente angeordnet, welche derart zwischen dem Antriebsaggregat und dem Fahrzeugaufbau angeordnet sind, dass deren Hauptwirkrichtung zumindest überwiegend in Fahrzeuglängsrichtung verläuft.

Ist die Hauptwirkrichtung des zusätzlichen Feder- bzw. Dämpfungselements in Fahrzeuglängsrichtung, so hat diese Lagerung bzw. Abstützung des Antriebsaggregats keine Auswirkungen bzw. keinen Einfluss auf eine andere Richtung, wie beispielsweise auf die Schwingfähigkeit des Antriebsaggregats in Fahrzeughochrichtung. Der Zielkonflikt zwischen einer weichen Federung bzw. Dämpfung in Fahrzeughochrichtung aus Akustikgründen einerseits und einer steifen Federung bzw. Dämpfung in Fahrzeuglängsrichtung aus Schwingungskomfortgründen andererseits kann durch die Wirkung in nur eine Richtung des zusätzlichen Feder- bzw. Dämpfungselements vorteilhaft gelöst werden.

Bevorzugt ist das zusätzliche Feder- bzw. Dämpfungselement dabei in Fahrzeuglängsrichtung vergleichsmäßig steif ausgebildet, sodass eine maximale bzw. optimale Abstützung des Antriebsaggregats in Fahrzeuglängsrichtung ermöglicht wird.

In einer weiteren bevorzugten Ausführung der Erfindung ist das zumindest eine zusätzliche Feder- und/oder Dämpfungselement derart in dessen Positionierung verstellbar ausgebildet, dass die Federung bzw. Dämpfung des zusätzlichen Feder- und/oder Dämpfungselements in einer zusätzlichen Nebenwirkrichtung wirkt. Besonders bevorzugt verläuft diese zusätzliche Nebenwirkrichtung in Fahrzeugquerrichtung. Wird also beispielsweise die Positionierung des Feder- bzw. Dämpfungselements minimal verändert, so ändert sich damit auch dessen Wirkrichtung.

Wird das Feder- bzw. Dämpfungselement demnach in seiner Positionierung derart verstellt, dass dessen (ursprünglich ausschließlich in Fahrzeuglängsrichtung verlaufenden) Hauptwirkrichtung minimal von der Fahrzeuglängsrichtung abweicht, so ergibt sich neben der Fahrzeuglängsrichtung (als Hauptwirkrichtung) noch eine weitere resultierende Wirkrichtung (eine Nebenwirkrichtung) welche bevorzugt die Fahrzeugquerrichtung darstellt.

Die Federung bzw. Dämpfung des Feder bzw.- Dämpfungselements wirkt dann folglich nicht mehr nur in eine Richtung (nämlich der Fahrzeuglängsrichtung), sondern zusätzlich (zumindest minimal) auch in beispielsweise Fahrzeugquerrichtung.

Je nach gewünschter Steifigkeit in gewünschter Richtung (also ob in Fahrzeugquerrichtung und/oder Fahrzeuglängsrichtung) kann die Positionierung des Feder- bzw. Dämpfungselements verändert bzw. verstellt werden. Die genannte Verstellung kann dabei beispielsweise durch eine Verschraubung oder einen anderen Stellmechanismus geschehen. Dabei ist eine mögliche Verstellbarkeit keinesfalls zwingend notwendig. Das Feder- bzw. Dämpfungselement kann genauso auch permanent (nicht verstellbar) in einer der genannten Positionen am Antriebsaggregat angeordnet sein.

In einem bevorzugten Ausführungsbeispiel ist das zumindest eine zusätzliche Feder- und/oder Dämpfungselement zumindest annähernd zylinderförmig ausgebildet, wobei die Wirkrichtung des Feder- bzw. Dämpfungselements in Richtung der Zylinderlängsachse dieses verläuft.

Unter einer im Wesentlichen bzw. zumindest annähernd zylinderförmigen Form wird dabei eine stangenähnliche Form mit einer Längsachse verstanden, welche von der kreisrunden Mantelfläche eines Kreiszylinders abweichen kann und ebenso andere Mantelformen aufweisen kann.

Um eine maximale und nur in einer Richtung wirkenden Abstützung des Antriebsaggregats mit dem Feder- bzw. Dämpfungselement zu ermöglichen, ist die Zylinderlängsachse und damit die Wirkrichtung des Feder- bzw. Dämpfungselements bevorzugt in Fahrzeuglängsrichtung ausgerichtet. Alternativ dazu kann die Zylinderlängsachse und damit die resultierende Wirkrichtung des zusätzlichen Feder- bzw. Dämpfungselements im Einbauzustand in eine weitere Richtung ausrichtbar bzw. ausgerichtet sein, welche Richtung mit einem bestimmen Winkel zur Fahrzeuglängsrichtung verläuft. Um dabei zu vermeiden, dass das zusätzliche Feder- bzw. Dämpfungselement einen Einfluss auf das Schwingungsverhalten des Antriebsaggregats in Fahrzeughochrichtung erfährt, ist die Zylinderlängsachse bevorzugt in einer Ebene angeordnet, welche parallel zu einer Fahrzeughorizontalebene ist.

Je nach Größe des eingestellten Winkels zwischen Fahrzeuglängsrichtung und der Zylinderlängsachse des zusätzlichen Feder- bzw. Dämpfungselements kann eine Nebenwirkrichtung resultieren, welche neben Kräfte bzw. Schwingungen in Fahrzeuglängsrichtung zusätzlich solche in Fahrzeugquerrichtung zu federn bzw. zu dämpfen vermag.

Erfindungsgemäß ist jedoch auch bei einer solchen angestellten bzw. angewinkelten Anordnung des Feder- bzw. Dämpfungselements der Anstellwinkel so gewählt, dass der Großteil der Steifigkeit in Fahrzeuglängsrichtung wirkt und nur ein kleiner Teil in Fahrzeugquerrichtung, woraus sich die Bezeichnungen einer Haupt- und Nebenwirkrichtung ergeben.

Ein Vorteil bei der angewinkelten bzw. angestellten Anordnung des zusätzlichen Feder- bzw. Dämpfungselements ist es, dass das zusätzliche Feder- bzw. Dämpfungselement unter einer extremen Last bzw. Kraft in Fahrzeuglängsrichtung eine Scherbewegung durchführt. Damit wird gezielt eine Versagensstelle bzw. eine Soll-Scherstelle geschaffen, welche in hohen Lastfällen versagt und damit beispielsweise Beschädigungen von weiteren Bauteilen (wie zum Beispiel Metallteile) des Antriebsaggregats vermieden werden können.

In einer weiteren Ausführung der Erfindung verbindet das zusätzliche Feder- bzw. Dämpfungselement das Getriebe als Teil des Antriebsaggregats mit dem Fahrzeugaufbau. Dabei ist es bevorzugt, dass das zusätzliche Feder- bzw. Dämpfungselement an der gleichen Seitenwand des Antriebsaggregats angeordnet ist, an welcher auch die Getriebelagerung angeordnet ist. Das zusätzliche Feder- bzw. Dämpfungselement kann auch an der Seitenwand des Antriebsaggregats angeordnet sein, welche das Getriebeende bzw. die hintere Stirnwand des Antriebsaggregats darstellt und an welcher die Abtriebswelle austritt. Zudem ist das zusätzliche Feder- bzw. Dämpfungselement bevorzugt in unmittelbarer Nähe des Getriebelagers angeordnet. Die Wirkung des zusätzlichen Feder- bzw. Dämpfungselements ist parallel zur Wirkung des Getriebelagers. Das zusätzliche Feder- bzw. Dämpfungselement ist also nicht seriell zum Getriebelager, sondern als parallel zum Getriebelager wirkendes Feder- bzw. Dämpfungselement angeordnet. Insbesondere im Hinblick auf den vorhandenen Bauraum und der herrschenden Hebelverhältnisse ist eine solche Positionierung von Vorteil. Diese und weitere Merkmale gehen außer aus den Ansprüchen und aus der Beschreibung auch aus den Zeichnungen hervor.

Im Folgenden wird die Erfindung anhand von zwei Ausführungsbeispielen weiter erläutert. Erfindungswesentlich können dabei sämtliche näher beschriebenen Merkmale sein.
**Figur 1** zeigt eine schematische Draufsicht eines Antriebsaggregates in dessen Einbaulage im Fahrzeug sowie eine Befestigung dessen an einem nicht aufgezeigten Fahrzeugaufbau.
**Figur 2** zeigt eine Detailansicht zweier erfindungsgemäß angeordneter zusätzlicher Federelemente in einer dreidimensionalen Ansicht, während in
**Figur 3** eine Draufsicht dieser aufgezeigt ist.

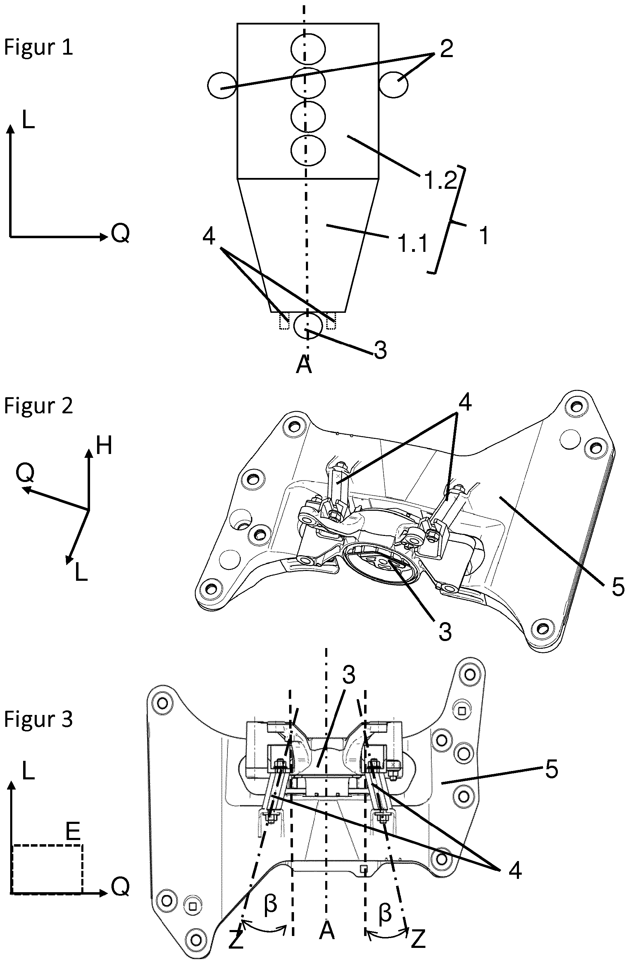

In **Figur 1** wird ein Antriebsaggregat 1 eines Kraftfahrzeuges im Einbauzustand aufgezeigt, welches mittels einer Anordnung von Lagern am nicht abgebildeten Fahrzeugaufbau befestigt ist. Dabei stellt das Antriebsaggregat eine Einheit aus einem Getriebe 1.1 und einem Motor 1.2 dar, was auch als sogenannte Motor-Getriebe-Einheit bezeichnet werden kann.

In diesem konkreten Falle ist das Antriebsaggregat 1 längs in das Fahrzeug eingebaut, was bedeutet, dass eine nicht eingezeichnete Abtriebswelle des Antriebsaggregats 1 in Fahrzeuglängsrichtung L angeordnet ist.

Der Motor 1.2 wird dabei von zwei sogenannten Motorlagern 2 und das Getriebe 1.1 von einem sogenannten Getriebelager 3 am Fahrzeugaufbau, also entweder an der Karosserie oder am Fahrwerk des Fahrzeuges, abgestützt. Das Getriebelager 3 und die Motorlager 2 können dabei als Hydrolager oder Gummilager ausgebildet sein.

Daneben sind zwei weitere zusätzliche Gummilager 4 am Antriebsaggregat 1 zur Abstützung dieses bzw. genauer des Getriebes 1.1 am Fahrzeugaufbau angeordnet. Diese sind an der gleichen Seitenwand am Getriebe 1.1 angeordnet, an welcher auch das Getriebelager 3 am Getriebe 1.1 angeordnet ist. Bei dem hier dargestellten längseingebauten Antriebsaggregat 1 sind die beiden zusätzlichen Gummilager 4 jeweils symmetrisch zueinander angeordnet, wobei die Aggregatslängsmittelachse A in diesem Falle die Symmetrielinie darstellt. Eine solche symmetrische Anordnung vermeidet weitere Krafteinflüsse durch unausgeglichene Hebelverhältnisse bei unsymmetrischer Anordnung. Im Falle der Verwendung nur eines zusätzlichen Feder- und/oder Dämpfungselements bzw. eines zusätzlichen Gummilagers, ist es aus den soeben genannten Gründen bevorzugt dieses auf einer Achse anzuordnen, welche den Massenschwerpunkt des Antriebsaggregats schneidet.

Bevorzugt sind die zusätzlichen Gummilager 4 zumindest annähernd zylindrisch ausgebildet. Beispielsweise können diese als sogenannte Kerbgummilager ausgebildet sein.

Die beiden zusätzlichen Gummilager 4 sind dabei derart zwischen dem Antriebsaggregat 1 und dem Fahrzeugaufbau angeordnet, dass deren Hauptwirkrichtung zumindest überwiegend in Fahrzeuglängsrichtung L verläuft.

Die Verwendung von zwei zusätzlichen Gummilagern 4 ist aufgrund einer stabileren und bezüglich der Hebelverhältnisse einfacheren Anordnung in diesem Fall zwar bevorzugt, beschreibt jedoch keinesfalls ein zwingendes Merkmal. Genauso ist es auch möglich nur eines oder mehr als zwei der zusätzlichen Gummilager 4 anzuordnen.

Wie in **Figur 1** zu erkennen sind die beiden zusätzlichen Gummilager 4 in unmittelbarer Nähe der Getriebelagerung 3 bzw. parallel zu dieser und in Fahrzeuglängsrichtung hinter einer (nicht aufgezeigten) Raddrehachse einer Vorderachse des Fahrzeuges angeordnet. Diese bevorzugte Anordnung bzw. Position der zusätzlichen Gummilager 4 birgt insbesondere hinsichtlich der vorherrschenden Hebelverhältnisse (insbesondere eines längseingebauten Antriebsaggregats 1) Vorteile. Des Weiteren steht an der genannten Position der für die zusätzlichen Gummilager 4 benötige Bauraum ausreichend Verfügung, wobei ein Konflikt mit anderen Bauteilen vermieden werden kann.

In **Figur 2** und **Figur 3** ist eine detailliertere Anordnung der genannten zusätzlichen Gummilager 4 aus Figur 1 in einer dreidimensionalen Ansicht (Figur 2) und einer Draufsicht (Figur 3) zu erkennen.

Dabei wird in diesen Figuren nicht mehr das Antriebsaggregat 1 aufgezeigt, sondern die Anbindung der zusätzlichen Gummilager 4 sowie des (parallel zu diesen angeordnete) Getriebelagers 3 an einem Fahrzeugaufbau 5.

Die Hauptwirkrichtung des Getriebelagers 3 ist üblicherweise in Fahrzeughochrichtung H. In Fahrzeuglängsrichtung ist das Getriebelager 3 vergleichsweise weich ausgebildet. Um jedoch das Antriebsaggregat 1 richtungsabhängig, in diesem Falle in Fahrzeuglängsrichtung L, mit einer bestimmten festgelegten Steifigkeit maximal abstützen zu können, sind die zusätzlichen Gummilager 4 angeordnet. Diese zusätzlichen Gummilager 4 sind als (zumindest annähernd) zylinderförmige Gummilager ausgebildet, deren Hauptwirkrichtung die Fahrzeuglängsrichtung L darstellt. Dies bedeutet, dass deren Federwirkung überwiegend in Fahrzeuglängsrichtung L ausgebildet ist. Unerwünschte Schwingungen in Fahrzeuglängsrichtung L des Antriebsaggregats 1 können so (richtungsabhängig) ohne nennenswerte Beeinflussung anderer Schwingungsbewegungen in weiteren Richtungen, vorteilhaft bedämpft bzw. verringert werden.

In diesem konkreten Fall sind die zusätzlichen Gummilager 4 derart ausgebildet, dass deren Wirkrichtung in Richtung der Zylinderlängsachse Z zeigt. Diese Anordnung ist insbesondere in **Figur 3** zu erkennen. Die Zylinderlängsachse Z zeigt also nicht exakt in Fahrzeuglängsrichtung L, sondern ist mit einem bestimmten Winkel β in einer Fahrzeughorizontalebene E betrachtet zu der Fahrzeuglängsachse L geneigt. Wie bereits genannt ist dieser Winkel ausschließlich in einer Fahrzeughorizontalebene E ausgebildet, sodass ausgeschlossen werden kann, dass eine nennenswerte Wirkung der zusätzlichen Gummilager 4 in Fahrzeughochrichtung H erfolgt.

Durch diese winkelige Anordnung der Zylinderlängsachse Z bzw. der Wirkrichtung der zusätzlichen Gummilager 4 innerhalb einer Fahrzeughorizontalebene E resultiert neben der Fahrzeuglängsrichtung L eine Nebenwirkrichtung, welche in Fahrzeugquerrichtung Q verläuft. Die zusätzlichen Gummilager 4 federn folglich auch (zumindest geringfügig) Schwingungen des Antriebsaggregats 1 in Fahrzeugquerrichtung Q ab.

Je nach Höhe des Winkels β der Zylinderlängsachse Z bzw. der Wirkrichtung der zusätzlichen Gummilager 4 zur Fahrzeuglängsrichtung L (innerhalb der Fahrzeughorizontalebene E) ist die Wirkung in Richtung der Fahrzeugquerrichtung Q mehr oder weniger stark ausgeprägt. Es ist jedoch bevorzugt, dass die Fahrzeuglängsrichtung L die Hauptwirkrichtung der zusätzlichen Gummilager 4 darstellt.

Die Einstellung des Winkels β kann dabei durch ein Verstellen der Position der zusätzlichen Gummilager 4 geschehen.

Besonders vorteilhaft ist die beschriebene winkelige Anordnung der zusätzlichen Gummilager 4 deswegen, da sie in einem sehr hohen Lastfall in Fahrzeuglängsrichtung L versagen würde und somit eine gezielte Scherstelle darstellt. Andere Bauteile können so vor weiterer Beschädigung in diesem Lastfall geschützt werden.

### Bezugszeichenliste:

- 1: Antriebsaggregat
- 1.1: Getriebe
- 1.2: Motor
- 2: Motorlager
- 3: Getriebelager
- 4: Zusätzliche Gummilager
- 5: Fahrzeugaufbau
- L: Fahrzeuglängsrichtung
- Q: Fahrzeugquerrichtung
- H: Fahrzeughochrichtung
- Z: Zylinderlängsachse
- A: Aggregatslängsmittelsachse
- β: Winkel zwischen Zylinderlängsachse und Fahrzeuglängsrichtung
- E: Fahrzeughorizontalebene

## Patentansprüche

1. Befestigung eines Antriebsaggregats (1) an einem Fahrzeugaufbau (5)
umfassend zumindest drei schwingungsdämpfende Elemente (2, 3), wobei
zumindest ein zusätzliches Feder- und/oder Dämpfungselement (4) zur Lagerung des Antriebsaggregats (1) am Fahrzeugaufbau (5) angeordnet ist, wobei das zusätzliche Feder- und/oder Dämpfungselement (4) derart zwischen dem Antriebsaggregat (1) und dem Fahrzeugaufbau (5) angeordnet ist, dass dessen Hauptwirkrichtung im Wesentlichen in Fahrzeuglängsrichtung (L) verläuft,
**dadurch gekennzeichnet, dass** die Feder- und/oder Dämpferwirkung des zumindest einen zusätzlichen Feder- und/oder Dämpfungselements (4) parallel zur Wirkung einer Getriebelagerung (3) ist.

2. Befestigung eines Antriebsaggregats nach Anspruch 1, wobei das zumindest eine zusätzliche Feder- und/oder Dämpfungselement (4) derart in dessen Positionierung verstellbar ausgebildet ist, dass das zusätzliche Feder- und/oder Dämpfungselement (4) in einer Nebenwirkrichtung wirkt.

3. Befestigung eines Antriebsaggregats nach Anspruch 1 oder 2, wobei die Nebenwirkrichtung in Fahrzeugquerrichtung (Q) verläuft.

4. Befestigung eines Antriebsaggregats nach einem der vorangegangenen Ansprüche, wobei eine Zylinderlängsachse (Z) eines im Wesentlichen zylinderförmig ausgebildeten zusätzlichen Feder- und/oder Dämpfungselements (4) im Einbauzustand im Wesentlichen in Fahrzeuglängsrichtung (L) ausgerichtet ist.

5. Befestigung nach Anspruch 4, wobei die
Zylinderlängsachse (Z) des im Wesentlichen zylinderförmig ausgebildeten zusätzlichen Feder- und/oder Dämpfungselements (4) im Einbauzustand in eine weitere Richtung ausrichtbar ist, welche Richtung mit einem Winkel (β) zur Fahrzeuglängsrichtung (L) verläuft und wobei die Zylinderlängsachse (Z) in einer Ebene angeordnet ist, welche parallel zu einer Fahrzeughorizontalebene (E) ist.

6. Befestigung eines Antriebsaggregats nach einem der vorangegangenen Ansprüche, wobei das zumindest eine zusätzliche Feder- und/oder Dämpfungselement (4) ein Getriebe (1.1) des Fahrzeuges mit dem Fahrzeugaufbau (5) verbindet.

7. Befestigung eines Antriebsaggregats nach einem der vorangegangenen Ansprüche, wobei das zumindest eine zusätzliche Feder- und/oder Dämpfungselement (4) an der gleichen Seitenwand des Antriebsaggregats (1) angeordnet ist, an welcher eine Getriebelagerung (3) angeordnet ist.

8. Befestigung eines Antriebsaggregats nach einem der vorangegangenen Ansprüche, wobei das zumindest eine zusätzliche Feder- und/oder Dämpfungselement (4) ein Gummilager ist.

9. Befestigung eines Antriebsaggregats nach einem der vorangegangenen Ansprüche, wobei das zumindest eine zusätzliche Feder- und/oder Dämpfungselement (4) eine hydraulische Dämpfung umfasst.

## Claims

1. Fastening of a drive unit (1) to a vehicle body (5) comprising at least three vibration-damping elements (2, 3), at least one additional spring and/or damping element (4) for mounting the drive unit (1) being arranged on the vehicle body (5), the additional spring and/or damping element (4) being arranged between the drive unit (1) and the vehicle body (5) in such a way that its main direction of action runs substantially in the vehicle longitudinal direction (L), **characterized in that** the spring and/or damper effect of the at least one additional spring and/or damping element (4) is parallel to the action of a transmission mount (3).

2. Fastening of a drive unit according to Claim 1, the at least one additional spring and/or damping element (4) being configured such that it can be adjusted in its positioning in such a way that the additional spring and/or damping element (4) acts in an auxiliary direction of action.

3. Fastening of a drive unit according to Claim 1 or 2, the auxiliary direction of action running in the vehicle transverse direction (Q).

4. Fastening of a drive unit according to one of the preceding claims, a cylinder longitudinal axis (Z) of an additional spring and/or damping element (4) of substantially cylindrical configuration being oriented substantially in the vehicle longitudinal direction (L) in the installed state.

5. Fastening according to Claim 4, it being possible for the cylinder longitudinal axis (Z) of the additional spring and/or damping element (4) of substantially cylindrical configuration to be oriented in a further direction in the installed state, which direction runs at an angle (β) with respect to the vehicle longitudinal direction (L), and the cylinder longitudinal axis (Z) being arranged in a plane which is parallel to a vehicle horizontal plane (E).

6. Fastening of a drive unit according to one of the preceding claims, the at least one additional spring and/or damping element (4) connecting a transmission (1.1) of the vehicle to the vehicle body (5).

7. Fastening of a drive unit according to one of the preceding claims, the at least one additional spring and/or damping element (4) being arranged on the same side wall of the drive unit (1), on which side wall a transmission mount (3) is arranged.

8. Fastening of a drive unit according to one of the preceding claims, the at least one additional spring and/or damping element (4) being a rubber bearing.

9. Fastening of a drive unit according to one of the preceding claims, the at least one additional spring and/or damping element (4) comprising a hydraulic damping means.

## Revendications

1. Fixation d'un groupe motopropulseur (1) sur une carrosserie de véhicule (5) comprenant au moins trois éléments amortissant les vibrations (2, 3), au moins un élément de suspension et/ou d'amortissement supplémentaire (4) étant agencé sur la carrosserie de véhicule (5) pour le montage du groupe motopropulseur (1), l'élément de suspension et/ou d'amortissement supplémentaire (4) étant agencé entre le groupe motopropulseur (1) et la carrosserie de véhicule (5) de telle sorte que sa direction d'action principale s'étend essentiellement dans la direction longitudinale du véhicule (L),
**caractérisé en ce que** l'action de suspension et/ou d'amortissement de l'au moins un élément de suspension et/ou d'amortissement supplémentaire (4) est parallèle à l'action d'un palier de transmission (3).

2. Fixation d'un groupe motopropulseur selon la revendication 1, dans laquelle l'au moins un élément de suspension et/ou d'amortissement supplémentaire (4) est configuré pour être réglable en termes de son positionnement, de telle sorte que l'élément de suspension et/ou d'amortissement supplémentaire (4) agit dans une direction d'action secondaire.

3. Fixation d'un groupe motopropulseur selon la revendication 1 ou 2, dans laquelle la direction d'action secondaire s'étend dans la direction transversale du véhicule (Q).

4. Fixation d'un groupe motopropulseur selon l'une quelconque des revendications précédentes, dans laquelle un axe longitudinal de cylindre (Z) d'un élément de suspension et/ou d'amortissement supplémentaire (4) configuré essentiellement sous forme cylindrique est orienté, à l'état monté, essentiellement dans la direction longitudinale du véhicule (L).

5. Fixation selon la revendication 4, dans laquelle l'axe longitudinal de cylindre (Z) de l'élément de suspension et/ou d'amortissement supplémentaire (4) configuré essentiellement sous forme cylindrique peut être orienté, à l'état monté, dans une autre direction, laquelle direction s'étend avec un angle (β) par rapport à la direction longitudinale du véhicule (L) et dans laquelle l'axe longitudinal de cylindre (Z) est agencé dans un plan qui est parallèle à un plan horizontal du véhicule (E).

6. Fixation d'un groupe motopropulseur selon l'une quelconque des revendications précédentes, dans laquelle l'au moins un élément de suspension et/ou d'amortissement supplémentaire (4) relie une transmission (1.1) du véhicule à la carrosserie de véhicule (5).

7. Fixation d'un groupe motopropulseur selon l'une quelconque des revendications précédentes, dans laquelle l'au moins un élément de suspension et/ou d'amortissement supplémentaire (4) est agencé sur la même paroi latérale du groupe motopropulseur (1) que celle sur laquelle est agencé un palier de transmission (3).

8. Fixation d'un groupe motopropulseur selon l'une quelconque des revendications précédentes, dans laquelle l'au moins un élément de suspension et/ou d'amortissement supplémentaire (4) est un palier en caoutchouc.

9. Fixation d'un groupe motopropulseur selon l'une quelconque des revendications précédentes, dans laquelle l'au moins un élément de suspension et/ou d'amortissement supplémentaire (4) comprend un amortissement hydraulique.
